# EUROPEAN PATENT SPECIFICATION

(11) **EP 1 712 285 B1**
(45) Date of publication and mention of the grant of the patent: **15.06.2011**
(21) Application number: 06007757.5
(22) Date of filing: 12.04.2006
(51) Int. Cl.: B01L 3/02, G01N 35/10, G01N 21/55

(54) **Fluid dispenser, fluid dispensing method and assay apparatus for assay in utilizing attenuated total reflection**
Abgabevorrichtung und -methode für Fluide und Untersuchungsvorrichtung zur Untersuchung mittels abgeschwächter Totalreflektion
Dispositif et méthode pour la distribution de fluide at dispositif d'essai utilisant la réfléction totale atténuée

(30) Priority: 13.04.2005 JP 2005116057; 29.09.2005 JP 2005284529; 28.03.2006 JP 2006088198
(43) Date of publication of application: 18.10.2006
(62) Divisional of application: 06023740.1
(73) Proprietor: FUJIFILM Corporation, Minato-ku Tokyo (JP)
(72) Inventor: Shimizu, Hitoshi c/o Fuji Photo Film Co., Ltd., Kanagawa (JP)
(74) Representative: Klunker . Schmitt-Nilson . Hirsch

(56) References cited:
- EP-A- 1 329 725
- EP-A- 1 460 422
- WO-A-2004/059301
- US-A- 5 055 263
- US-A1- 2004 112 529

## Description

### BACKGROUND OF THE INVENTION

### 1. Field of the Invention

The present invention relates to a fluid dispenser and a fluid dispensing method according to the preamble of claims 1 and 5, respectively as well as to an assay apparatus for assay in utilizing attenuated total reflection. More particularly, the present invention relates to a fluid dispenser, fluid dispensing method in which leakage of fluid can be prevented, and assay apparatus for assay in utilizing attenuated total reflection.

### 2. Description of the Related Art

An assay apparatus for assay in utilizing attenuated total reflection is used for various kinds of studies in a biochemical field or the like, for example to study interaction of protein, DNA and various biomaterials, and to select candidate drugs by screening. Also, the technique is useful in the fields of the clinical medicine, food industries and the like.

A surface plasmon resonance (SPR) sensor is known as an assay apparatus in utilizing attenuated total reflection. Surface plasmon is a term to mean the compressional wave created on the surface of the metal and included in plasmon as quantized expression of the compressional wave. Free electrons in a metal vibrate to generate the compressional wave.

U.S. Pat. No. 5,164,589 and 5,313,264 (corresponding to JP-B 3294605) discloses the SPR assay apparatus with Kretschmann configuration. In the assay apparatus, the sensing surface is positioned opposite to an interface where a metal thin film is connected with a dielectric block. The sensing surface is caused to create surface plasmon resonance. Reaction of samples is assayed by detecting the SPR on the sensing surface. Then total reflection of the illuminating light occurs.

Upon the total reflection created on the metal/dielectric interface, a small component of the light passes through the metal film without reflection, and penetrates to the sensing surface. A wave of the penetrating component is called an evanescent wave. Surface plasmon resonance (SPR) is created when frequency of the evanescent wave coincides with that of the surface plasmon. In response to this, intensity of the reflected light attenuates remarkably. In the assay apparatus, the attenuation in the reflected light reflected by the metal/dielectric interface is detected, to recognize creation of the SPR on the sensing surface.

A sample or biomaterial, such as protein, is handled as sample fluid for the purpose of preventing deactivation or modification due to drying. The sample fluid contains biomaterial and fluid medium, examples of which include pure water, physiological saline water, liquid buffer and the like. U. S. Pat. No. 5,164,589 and 5,313,264 (corresponding to JP-B 3294605), for assay of reaction of a sample or biomaterial, suggests a use of a flow channel which is positioned on a sensing surface and where a sample fluid flows. A body of the assay apparatus has an assay stage. A sensor unit of a chip type includes a glass substrate and a thin film of metal formed thereon, and is placed on the assay stage for assay.

In the above indicated patent, tubes or conduits are connected with pumps, valves and the like, to cause the sample fluid to flow from a reservoir directly to the flow channel. However, there is a problem in risk of contamination caused by mixing of residual sample in the conduits with the sample fluid.

A suggested SPR assay apparatus includes pipette devices each of which has a pipette tip and a pipette head. The pipette tip has a partially conical surface, and has an end opening. The pipette head is connected with and supports the pipette tip in a removable manner. The sample fluid or other liquids are introduced from a reservoir to the flow channel of the sensor unit. The pipette tip is detipped for renewal at each time of a change of the liquids, so a contamination of the liquids is prevented in introduction to the flow channel.

The SPR assay apparatus is used with a sensor unit, which includes a flow cell, a prism and a sealing mechanism. The flow cell includes the flow channel. The prism is provided with the thin film of metal. The sealing mechanism seals the flow cell by fastening a lower surface of the flow cell on an upper surface of the prism. Namely, the thin film is opposed to the flow channel. The flow channel is a path penetrating the flow cell in a U shape. The pipette devices are inserted in end orifices of the flow channel. A first one of the pipette devices aspirates to draw and remove the liquid or air from the flow channel. A second one of the pipette devices dispenses the liquid. Thus, the liquid in the flow channel is exchanged.

A syringe pump is associated with each one of the pipette devices, and includes a cylinder and a piston. The piston is so controlled with in a synchronized manner that a first one of the pipette devices at the flow channel is driven for aspiration and a second one of the pipette devices at the flow channel is driven for dispensation simultaneously. To this end, a cam mechanism is used.

There is a problem in the course of pulling away the pipette devices from the flow channel. The liquid of a small amount is likely to lead from the pipette devices to enter the flow channel in an unwanted manner. Contamination will occur if the sample fluid to be discharged enters the flow channel on the aspirating side. Furthermore, shock occurs upon a drop of droplets of liquid in the flow channel, to create electric noise of a detection signal. However, no solution is known for removing influence of electric noise.

In accordance with the preamble of claim 1, WO 2004/059301 A1 discloses a fluid dispenser. In that type of fluid dispenser, the dispensing pump causes the first pipette device to dispense the sample and the aspirating pump causes the second pipette device to aspirate the sample. Also this prior art fluid dispenser may suffer from the leakage of fluid as discussed above.

EP-A-1 460 422 discloses a test apparatus in which a predetermined treating process is carried out when a failure is determined from the pipette devices. A leak sensor responds to the presence of spilled fluids.

### SUMMARY OF THE INVENTION

In view of the foregoing problems, an object of the present invention is to provide a fluid dispenser, fluid dispensing method in which leakage of fluid can be prevented, and assay apparatus for assay in utilizing attenuated total reflection.

The invention provides a fluid dispenser having the features of claim 1.

Preferred embodiments are defined by the dependent claims. dispensing and aspirating pumps, to cancel a finite difference between the dispensing flow rate and the aspirating flow rate. A pump driver drives the dispensing and aspirating pumps according to the corrected speed.

Preferably, the pipette device group is constituted by plural multiple pipette assemblies. Furthermore, a memory stores information of a corrected speed of the aspirating pump for each of the plural multiple pipette assemblies, to cancel a finite difference between the dispensing flow rate and the aspirating flow rate. A pump driver drives the aspirating pump according to the corrected speed.

Also, an assay apparatus is provided as defined by claim 4.

Consequently, it is possible according to the invention to prevent leakage of fluid in the immobilization and assay.

### BRIEF DESCRIPTION OF THE DRAWINGS

The above objects and advantages of the present invention will become more apparent from the following detailed description when read in connection with the accompanying drawings, in which:
Fig. 1 is a perspective view illustrating a preferred assay apparatus of the invention;
Fig. 2 is a perspective view illustrating a sensor unit;
Fig. 3 is an exploded perspective view illustrating the sensor unit;
Fig. 4 is a cross section illustrating a flow channel of the sensor unit;
Fig. 5 is an explanatory view in perspective, illustrating a path of illuminating light together with measuring and reference regions;
Fig. 6 is a cross section illustrating a fluid dispenser;
Fig. 7 is a block diagram illustrating an optical assay unit of the assay apparatus;
Fig. 8 is a block diagram illustrating a controller and its relevant elements;
Fig. 9 is a chart illustrating a correction table;
Fig. 10 is a flow chart illustrating steps in assay;
Fig. 11 is a flow chart illustrating delivery of analyte;
Fig. 12 is an explanatory view in perspective, illustrating another preferred fluid dispenser; and
Fig. 13 is a chart illustrating a correction table.

### DETAILED DESCRIPTION OF THE PREFERRED EMBODIMENT(S) OF THE PRESENT INVENTION

A preferred embodiment is described, in which changes in the pressure of dispensed fluid are suppressed. An assay apparatus 210 or biosensor apparatus is for the surface plasmon resonance assay.

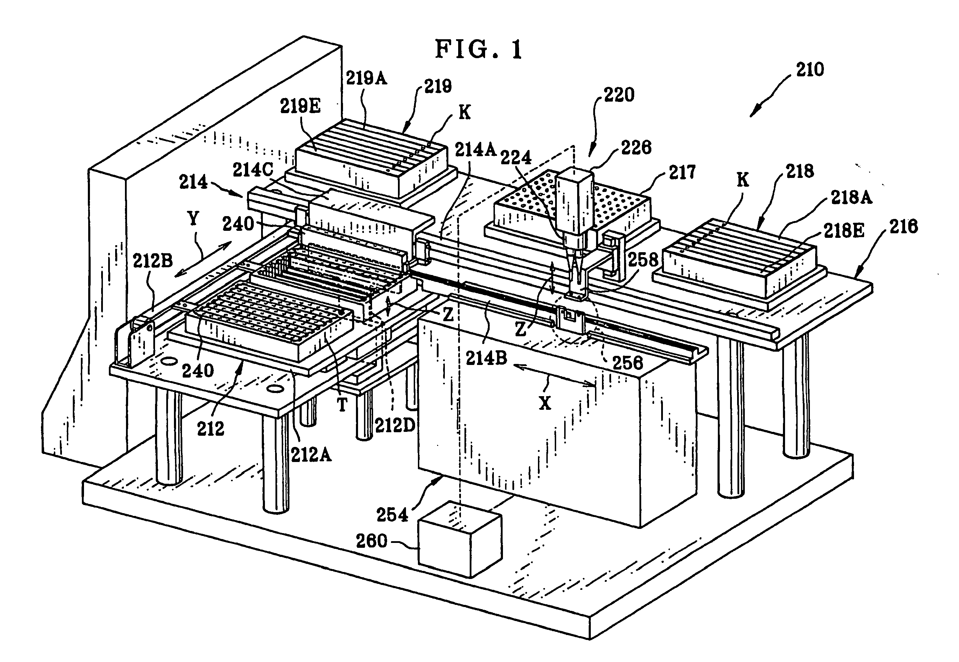

In Fig. 1, the assay apparatus 210 includes a flow cell support 212, a flow cell moving unit 214, a reservoir support 216, a fluid dispenser 220 with a multiple pipette assembly, an optical assay unit 254, and a controller 260 as speed controller.

The flow cell support 212 is a combination of various elements which are a pallet 212A, a belt 212B and the like. The belt 212B extends in the arrow direction Y, has the pallet 212A secured thereto, and turns about to move the pallet 212A in the direction Y. A tray or holder T is placed on the pallet 212A. An SPR sensor unit or sensor stick 240 for surface plasmon resonance (SPR) assay is contained in the tray or holder T. The sensor unit 240 has a chip for immobilizing the ligand D. A shifting mechanism 212D is disposed lower than the pallet 212A. A flow cell positioning panel 214C is disposed in a position where the sensor unit 240 can be shifted up by the shifting mechanism 212D. 3

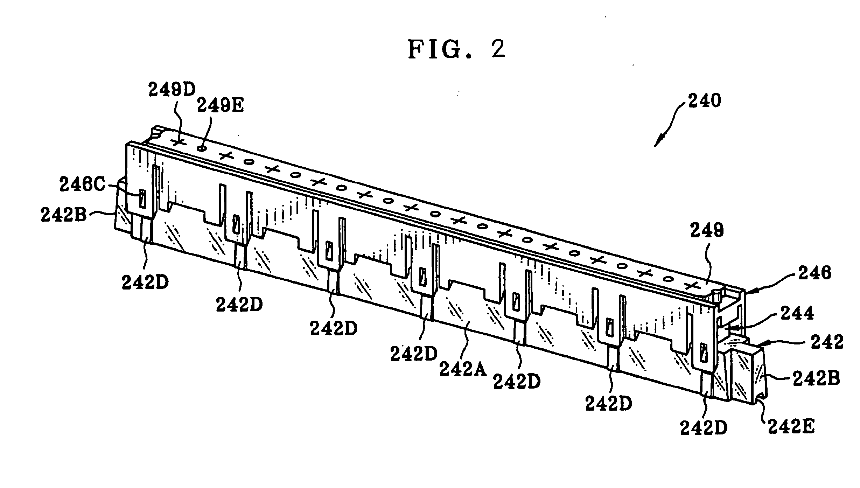

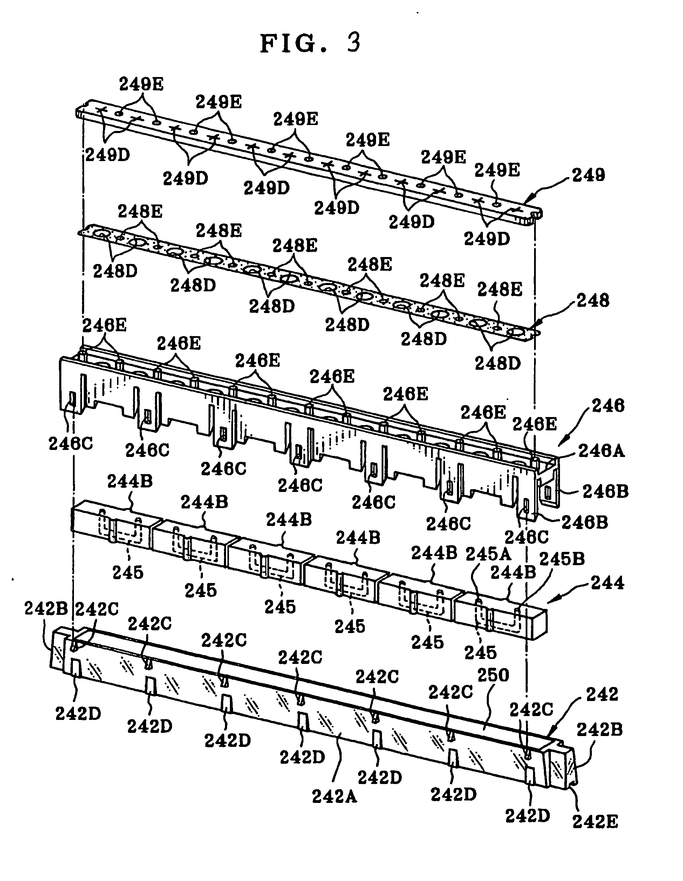

In Figs. 2 and 3, the sensor unit or sensor stick 240 includes a prism 242 as dielectric medium, a flow cell 244, a sealing mechanism 246, a double sided adhesive tape 248, and a flow cell lid 249 for preventing evaporation.

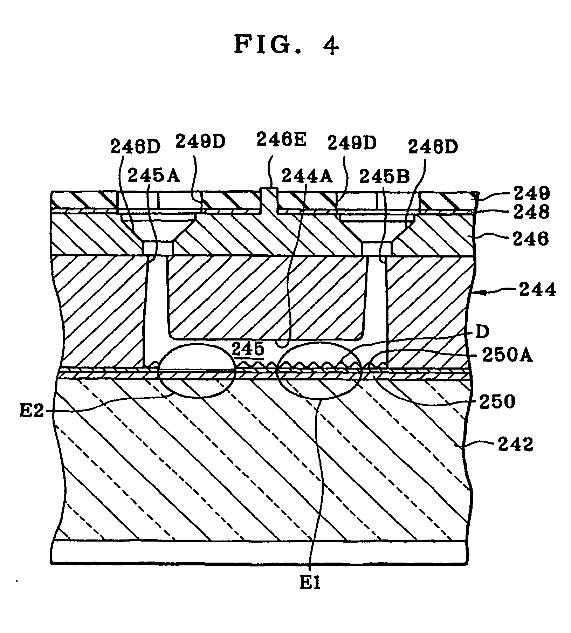

The prism 242 is formed from transparent resin with high transmittance of light, and includes a prism portion 242A and retention portions 242B. The prism portion 242A is in a shape of polyhedron and extends long in one direction. The retention portions 242B are formed with ends of the prism portion 242A as molded portions. In Fig. 4, metal film or thin film 250 with a sensing surface is formed on the upper surface of the prism portion 242A, the upper surface being one of two horizontal surfaces but larger than a remaining one of those. Ligand D for analysis with the assay apparatus 210 is immobilized on the thin film 250. The prism 242 is an optical device, of which the prism portion 242A has first and second side surfaces not parallel with one another, receives a light beam through the first side surface, and causes exit of the light beam through the second side surface upon reflection on an interface between the prism portion 242A and the thin film 250.

In Fig. 4, a linker film 250A as sensing surface is formed on the thin film 250. The linker film 250A is used to immobilize the ligand D on the thin film 250. There are a measuring region E1 and a reference region E2 formed in the linker film 250A. The measuring region E1 has immobilization of a ligand D, and is a region for reaction between the ligand D and analyte A. The reference region E2 does not have immobilization of a ligand D, and is used for outputting a reference signal for comparison with a signal retrieved from the measuring region E1. Note that the reference region E2 is formed in the course of film production of the linker film 250A. An example of a process of the forming has steps of surface processing of the linker film 250A at first, and then deactivating the reaction groups in approximately a half of an entire area of the linker film 250A for binding with ligand D. A half of the linker film 250A becomes the measuring region E1. The other half of the linker film 250A becomes the reference region E2. In order to deactivate the reaction groups, it is possible to use ethanol amine hydrochloride used in blocking. On other example for forming the reference region E2 is to use alkyl thiol instead of carboxy methyl dextran in the reference region E2. This makes it possible to position the alkyl group on the surface. The alkyl group is not bindable in the amino coupling method, and thus can construct the reference region E2.

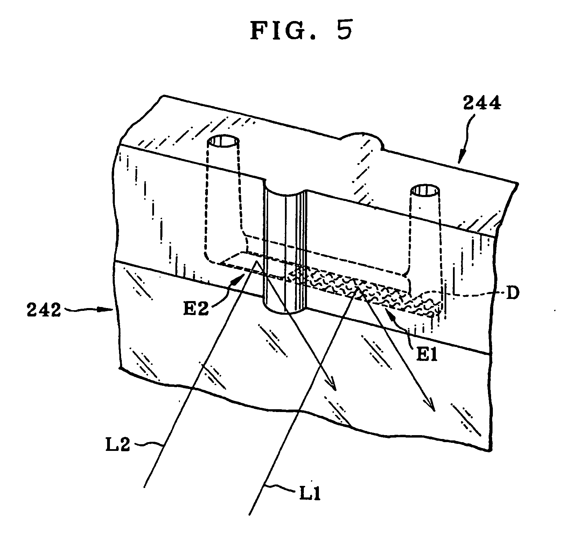

In Fig. 5, there is a flow channel 245 in which the linker film 250A extends. The ligand D is immobilized in an area of the linker film 250A different from the reference region E2. There is no ligand D immobilized in the reference region E2. Portions of the linker film 250A are subjected to application of light beams L2 and L1, the portions being included in the reference region E2 and the measuring region E1 upstream from the reference region E2. The reference region E2 is an area for correcting data obtained from the measuring region E1 with the ligand D immobilized thereon.

On lateral faces of the prism portion 242A, engageable projections 242C and projections 242D are formed. The engageable projections 242C are located on an upper edge, and engageable with the sealing mechanism 246. The projections 242D are located on a lower edge, and lie on an extension of a virtual surface vertical to the upper surface of the prism portion 242A. An engageable channel 242E is formed in a middle portion of the lower face of the prism 242 as viewed longitudinally.

A width of the flow cell 244 in a long box shape is slightly smaller than a width of the prism 242. In Fig. 3, six flow cells 244 are arranged on the thin film 250 of the prism 242. A channel recess 244A is formed in a lower portion of the flow cell 244. An entrance orifice or first orifice 245A and an exit orifice or second orifice 245B are formed through an upper portion of the flow cell 244, and are connected with the channel recess 244A, so the flow channel 245 as a path is formed with the thin film 250. Thus, the six flow channels 245 are separately formed in the sensor unit or sensor stick 240. A projection 244B is formed in each of lateral walls of the flow cell 244, for being pressed in a recess (not shown) in the sealing mechanism 246, for keeping the joint sealed in contact with the sealing mechanism 246.

A preferable example of material of the flow cell 244 is one that does not have non-specific adsorption to protein. This is because fluid containing protein flows in the flow channel 245, but must be prevented from sticking on the inside of the flow cell 244.

There are an upper panel 246A and lateral panels 246B in the sealing mechanism 246. Holes 246C are formed in the lateral panels 246B for engagement with the engageable projections 242C of the prism 242. Six flow cells 244 are squeezed between the sealing mechanism 246 and the prism 242 in connecting the sealing mechanism 246 with the prism 242 by engagement of the holes 246C and the engageable projections 242C. Thus, the flow cell 244 is secured to the prism 242. A passage aperture 246D is formed in the upper panel 246A for the position of each of the first and second orifices 245A and 245B in the flow cell 244, and has a shape with a decreasing width toward the flow cell 244. Rod shaped bosses 246E are formed between the passage apertures 246D for positioning.

The flow cell lid 249 is attached to the upper face of the sealing mechanism 246 by the double sided adhesive tape 248. Apertures 248D for access are formed in the double sided adhesive tape 248 and positioned at the passage apertures 246D for pipette insertion. Positioning holes 249E are formed in the double sided adhesive tape 248 and opposed to the bosses 246E. A cross shaped slit 249D is formed in the flow cell lid 249 and opposed to the passage aperture 246D. Holes 248E are formed in the flow cell lid 249 at the bosses 246E. The bosses 246E are inserted in the holes 248E and the positioning holes 249E, to attach the flow cell lid 249 on the upper face of the sealing mechanism 246, to oppose the cross shaped slit 249D of the flow cell lid 249 to the first and second orifices 245A and 245B of the flow cell 244. When the pipette tip CP is not inserted, the portion of the cross shaped slit 249D closes the first orifice 245A, to prevent evaporation of fluid in the flow channel 245.

In Fig. 1, elements of the flow cell moving unit 214 of the assay apparatus 210 include an upper rail 214A, a lower rail 214B and the flow cell positioning panel 214C. The upper and lower rails 214A and 214B extend horizontally in the direction of the arrow X that is crosswise to the arrow Y, and are disposed higher than the flow cell support 212 and the optical assay unit 254. The flow cell positioning panel 214C is secured to the upper rail 214A. The flow cell positioning panel 214C keeps the retention portions 242B at ends of the sensor unit or sensor stick 240, and is movable along the upper rail 214A. The engageable channel 242E of the sensor unit 240 on the flow cell positioning panel 214C is engaged with the lower rail 214B. A photo detection region 256 is disposed on the optical assay unit 254, and is provided with the sensor unit 240 when the flow cell positioning panel 214C moves in the direction of the arrow X. Also, a fastener 258 is disposed in the photo detection region 256 and fastens the sensor unit 240 during the assay. The fastener 258 is kept movable in the direction of the arrow Z by a driving mechanism (not shown), and retains the sensor unit 240 downwards in the photo detection region 256 with pressure.

An analyte reservoir 217 or multi well analyte plate, a buffer reservoir 218 or multi well buffer plate, and a waste fluid reservoir 219 or multi well waste fluid receptacle are placed on the reservoir support 216. The analyte reservoir 217 has regions distributed in a matrix form, and stores analyte fluids of various types. Wells 218A-218E are included in the buffer reservoir 218, and store buffers of various types. An opening K is defined in each of the wells 218A-218E for insertion of the pipette tip CP. Wells 219A-219E are included in the waste fluid reservoir 219 as receptacles of waste fluid. Also, an opening K is defined in each of the wells 219A-219E for insertion of the pipette tip CP.

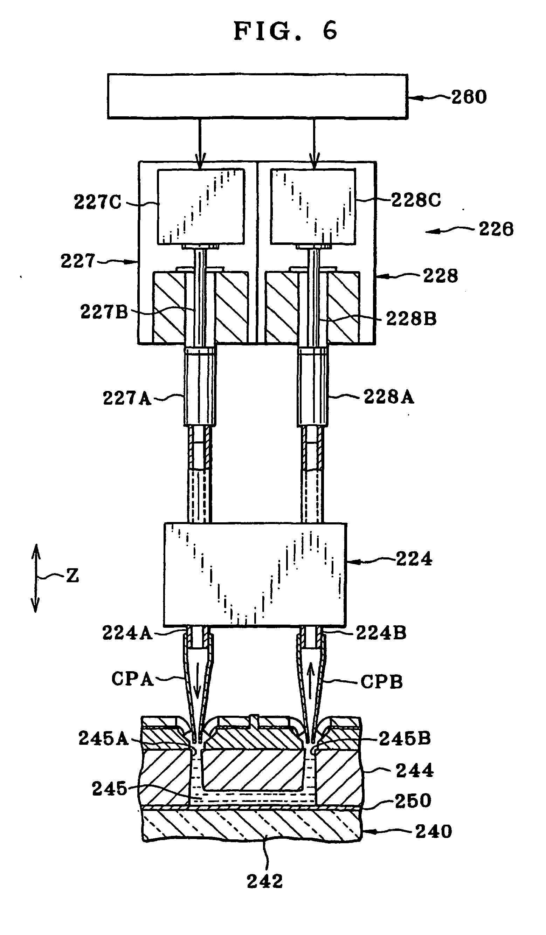

The fluid dispenser 220 includes a pipette head 224 in a multiple pipette assembly, and a fluid transfer mechanism 226 for dispensation and aspiration. The pipette head 224 is movable in the direction Y along transport rails (not shown). A driving mechanism (not shown) in the pipette head 224 moves the unit of the pipette head 224 in the vertical direction indicated with the arrow Z. In Fig. 6, the pipette head 224 includes pipette devices 224A and 224B with pipette nozzles. A pipette tip CP is fitted on each of the pipette devices 224A and 224B, so that a length of each of the pipette unit is changeable in the direction Z. A great number of the pipette tips CP are stored in a pipette tip storage, and are exchangeable if required.

The fluid transfer mechanism 226 includes a first pump or dispensing pump 227 and a second pump or aspirating pump 228. The dispensing pump 227 is structurally a syringe pump, and includes a cylinder 227A, a piston 227B, and a first pump motor 227C for driving the piston 227B. The aspirating pump 228 is structurally a syringe pump, and includes a cylinder 228A, a piston 228B, and a second pump motor 228C for driving the piston 228B. The pump motors 227C and 228C are connected with respectively pump drivers 260D and 260E provided in the controller 260.

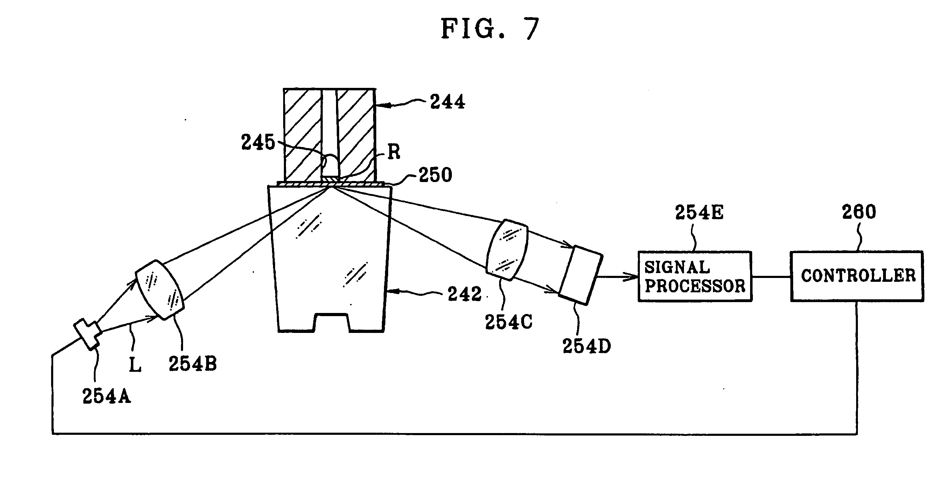

In Fig. 7, the optical assay unit 254 includes a light source 254A, a first optical system 254B, a second optical system 254C, a photo detector 254D and a signal processor 254E. A light L or light beam of a diffused state is emitted by the light source 254A. The first optical system 254B receives the light L and converts this into two light beams L1 and L2, which become incident on the regions of the prism 242 on the photo detection region 256. The light or light beams L1 and L2 are incident on the interface between the thin film 250 and the prism 242 with numerous components of incident angles, and also are incident at angles equal to or more than an angle enough for total reflection. The light L1 and L2 is reflected by the interface between the prism 242 and the thin film 250 in the manner of total reflection. There are plural angles as angular components of reflections in the totally reflected light L1 and L2. The light L1 and L2 is passed through the second optical system 254C, received by the photo detector 254D and converted photoelectrically, so that a detection signal is sent to the signal processor 254E. The signal processor 254E processes information according to the detection signal, and determines data of angles of attenuated total reflection of the measuring and reference regions E1 and E2. The angle data are output to the controller 260.

The controller 260 controls the entirety of the assay apparatus 210. In Fig. 7, the controller 260 is connected with the light source 254A,'the signal processor 254E and a driving system (not shown) for the assay apparatus 210.

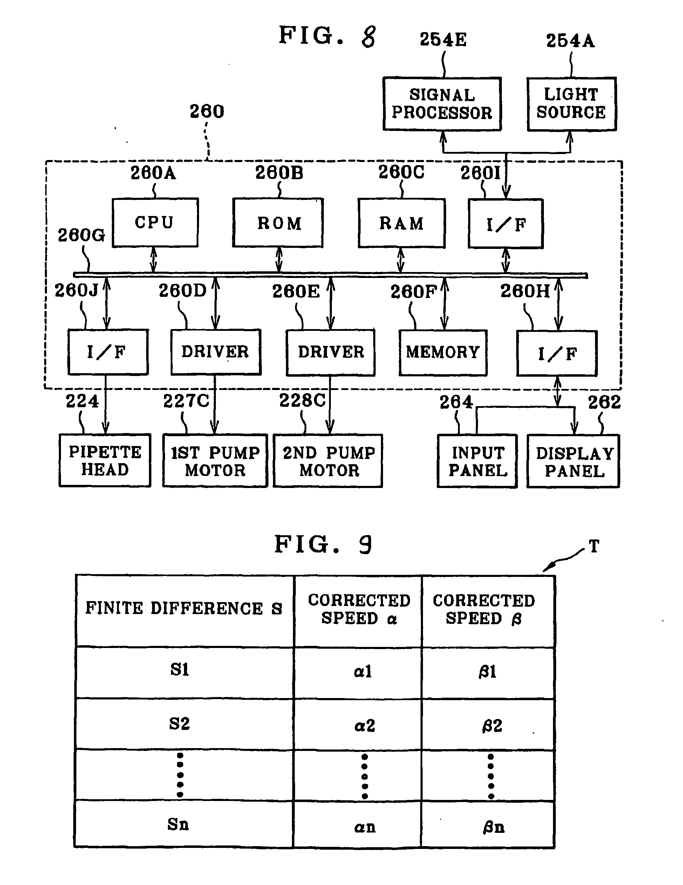

In Fig. 8, the controller 260 includes not only the pump drivers 260D and 260E but a CPU 260A, ROM 260B, RAM 260C, a memory 260F and interfaces 260H, 260I and 260J. A bus 260G connects those elements with one another. The pump driver 260D is connected with the first pump motor 227C. The pump driver 260E is connected with the second pump motor 228C. A display panel 262 is connected by the interface 260H with the controller 260 for displaying information of various kinds. An input panel 264 is connected by the interface 260H with the controller 260 for inputting various signals for command and information. Also, the signal processor 254E and the light source 254A are connected by the interface 260I. The pipette head 224 is connected by the interface 260J. The ROM 260B stores programs for control of the pipette head 224, and the dispensing and aspirating pumps 227 and 228.

In Fig. 9, the memory 260F stores a data table T of data of a relationship between the finite difference S and the corrected speeds α and β. The finite difference S is defined between dispensing and aspirating flow rates of the dispensing and aspirating pumps 227 and 228 per unit time. The corrected speeds α and β are levels of speed of the dispensing and aspirating pumps 227 and 228 for canceling the finite difference S. The finite difference S is derived from an error in an inner diameter of the cylinder of the syringe pump. Note that information of the corrected speeds α and β may not be speeds itself, but can be information represented by numbers of pulses of the stepping motor, or information of rates of increase or decrease of the speed. Also, one of the corrected speeds α and β may be omitted, and only a remaining one of those for either one of the dispensing and aspirating pumps 227 and 228 may be used. The finite difference S in the assay apparatus 210 of the embodiment is previously determined experimentally. For the corrected speeds α and β, plural values are prepared and selectively used. Symbols S1, α1 and β1 are used herein.

In the present invention, information for the corrected speeds α and β of the pumps may be in any suitable form, for example pressure exerted by pumps to fluid, energy for driving the pumps with the motors, or other quantitative values.

Assay in the assay apparatus 210 will be hereinafter described.

A tray is set on the pallet 212A of the assay apparatus 210, with the sensor unit or sensor stick 240 where the ligand D is immobilized and the flow channel 245 is filled with the fluid C for preservation. Analyte fluid is stored in the analyte reservoir 217.

At first, the shifting mechanism 212D shifts up the sensor unit or sensor stick 240 to the position of the flow cell positioning panel 214C, for the flow cell positioning panel 214C to keep the sensor unit 240. Then the flow cell positioning panel 214C with the sensor unit 240 shifts along the lower rail 214B, to transport the sensor unit 240 to the photo detection region 256. The sensor unit 240 in the photo detection region 256 is set suitably in assay position, and kept immovable by the fastener 258 with downward pressure.

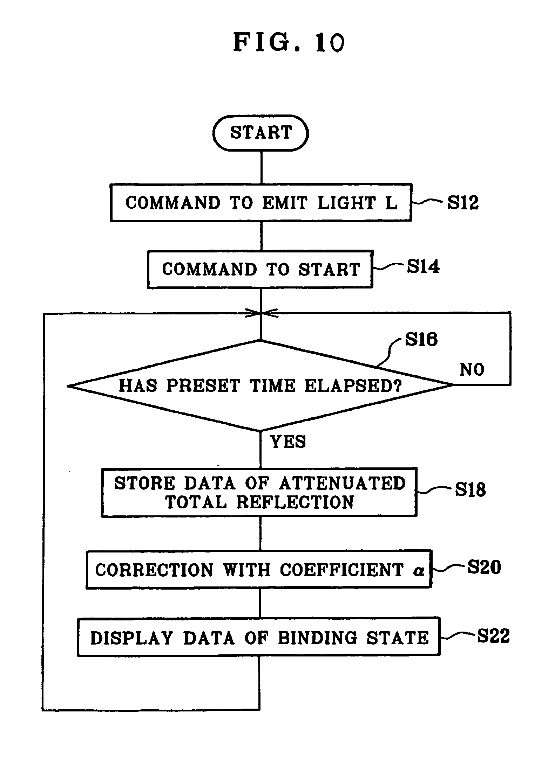

A command signal for starting the assay is input by the input panel 264. In response, the assay of Fig. 10 is started by the controller 260.

In the step S12, the light source 254A is provided with a command signal for emission of the light L. The light source 254A responsively emits the light L. The first optical system 254B converts the light L into two light beams L1 and L2, which become incident on the measuring and reference regions E1 and E2. In the step S14, the controller 260 sends a command signal to the photo detector 254D and the signal processor 254E. The light L1 and L2, passed through the second optical system 254C after total reflection on the measuring and reference regions E1 and E2, is received by the photo detector 254D. The light L1 and L2 is photoelectrically detected in each of the measuring and reference regions E1 and E2, to send detection signals to the signal processor 254E. The signal processor 254E processes the detection signals, and creates angle data of the attenuated total reflection. The angle data is sent to the controller 260.

In the step S16, the controller 260 determines whether time of a preset length has elapsed or not. In the step S18 after the lapse of the time, the angle data of the attenuated total reflection is written to the memory 260F. In the step S20, angle data according to the detection signal from the measuring region E1 is corrected by considering angle data according to the detection signal from the reference region E2. Data of a binding state is created, the binding state being of the ligand D with the analyte A in the analyte fluid YA. In the step S22, the data of the binding state is output to the display panel 262. The data of the binding state per unit time is written to the memory 260F, and can be displayed on the display panel 262. A form of displaying the data of the binding state is a graph form. Note that the operation of the assay is continued until reception of the end signal of measuring in the assay.

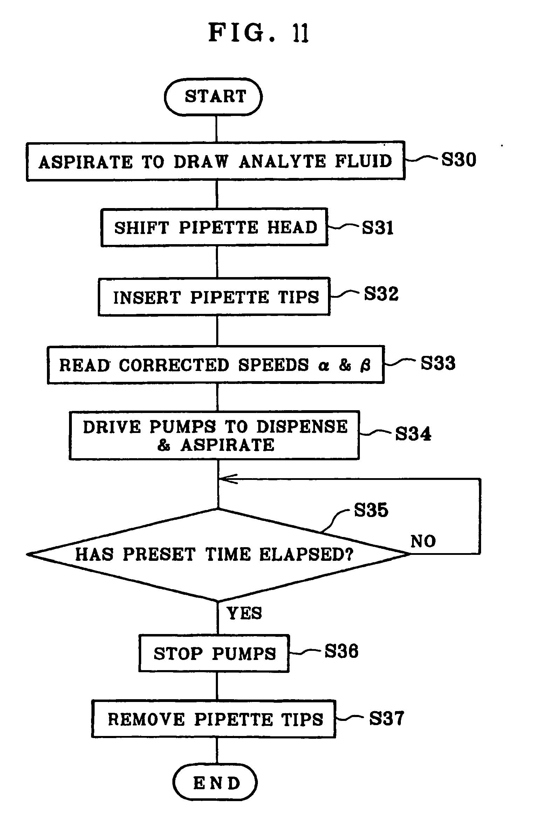

When a command signal for starting delivery of analyte is input by the input panel 264, then the controller 260 operates for the process of analyte delivery as illustrated in Fig. 11.

At first, the analyte fluid YA is delivered by aspiration through the pipette tip CPA. To this end, the pipette head 224 is shifted and set higher than the analyte reservoir 217 storing the analyte fluid YA. The pipette device 224A is moved down to insert only an end of the pipette tip CPA secured to the pipette device 224A, for insertion in a well storing the analyte fluid YA. The first pump motor 227C drives the piston 227B for decompression of the cylinder 227A with negative pressure. The analyte fluid YA is aspirated and drawn into the pipette tip CPA.

In the step S31, the pipette head 224 is moved to the sensor unit or sensor stick 240. In the step S32, the pipette tip CPA is inserted in the first orifice 245A. The pipette tip CPB is inserted in the second orifice 245B.

In the step S33, the corrected speeds α1 and β1 are read from the memory 260F. In the step S34, the controller 260 outputs command signals to the pump drivers 260D and 260E to drive the pump motors 227C and 228C at the corrected speeds α1 and β1. Thus, the dispensing and aspirating pumps 227 and 228 are driven. The analyte fluid YA is dispensed by the pipette tip CPA to introduce to the flow channel 245. The buffer liquid in the flow channel 245 is aspirated and removed by the pipette tip CPB.

In the step S35, the apparatus waits to stand until lapse of predetermined time for delivery of analyte fluid YA of a predetermined amount. Upon the lapse of predetermined time, the dispensing and aspirating pumps 227 and 228 are stopped in the step S36.

In the step S37, the pipette tips CPA and CPB are removed from the first and second orifices 245A and 245B. In the step S38, the buffer liquid in the pipette tip CPB is drained to the waste fluid reservoir 219. Thus, the operation of delivery of the analyte is completed.

Also, the assay is completed when a completion command signal is received.

It follows in the embodiment that the introduction of the analyte fluid YA to the flow channel 245 is according to driving of the dispensing and aspirating pumps 227 and 228 at the corrected speeds α1 and β1. Changes in the pressure of the fluid delivery can be suppressed because a difference can be canceled between the dispensing flow rate to the flow channel 245 and the aspirating flow rate from the flow channel 245 per unit time. Failure in the introduction of fluid can be prevented, to make higher the reliability of the assay apparatus 210.

In the present embodiment, speed of the dispensing or aspirating pump 227 or 228 is corrected in relation to the analyte fluid YA. However, it is possible in the invention to control the speed of pumps in relation to buffer, washing liquid or the like so as to suppress changes in the pressure of the fluid dispensation.

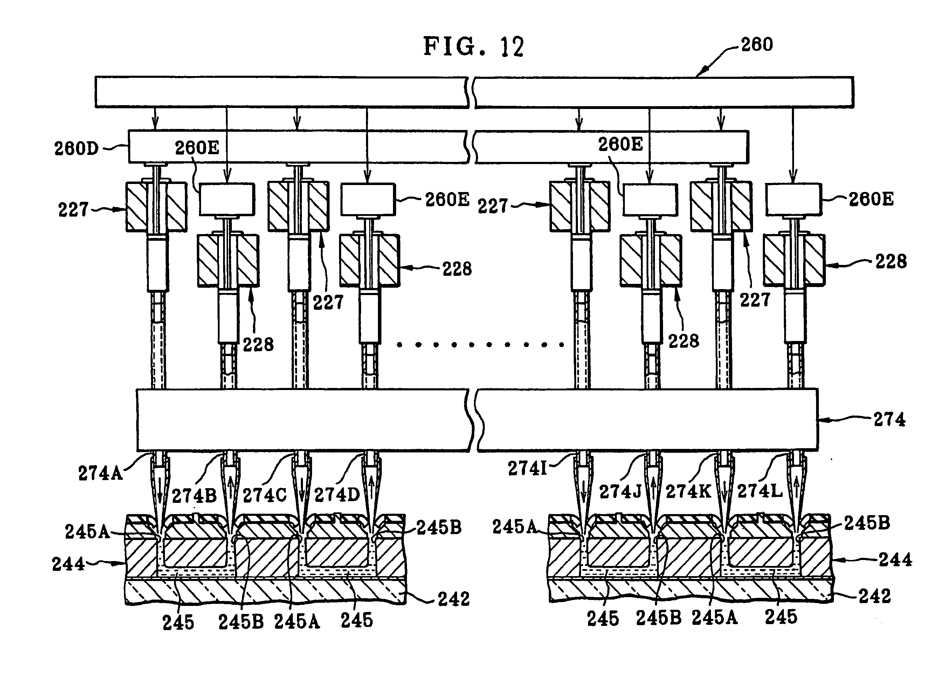

In Fig. 12, another preferred embodiment of a multichannel type is illustrated. A multichannel pipette head 274 in multiple pipette assemblies is provided with 12 pipette devices 274A-274L in six couples. Fluids can be sent to a plurality of the flow channels 245 at one time. To this end, the pipette devices 274A, 274C, 274E, 274G, 274I and 274K are on the side of dispensation at one time. Each of those is inserted in the first orifice 245A and operated by driving of the dispensing pump 227 with the pump driver 260D. In turn, the pipette devices 274B, 274D, 274F, 274H, 274J and 274L are on the side of aspiration at one time. Each of those is inserted in the second orifice 245B and operated by driving of the aspirating pump 228 with the pump driver 260E.

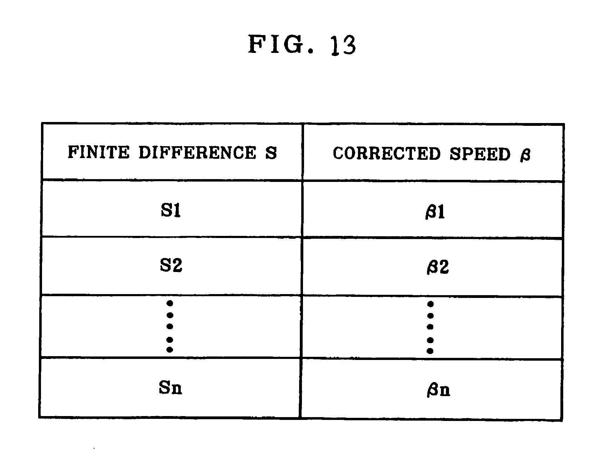

The corrected speed for canceling the finite difference S between the dispensing and aspirating flow rates is referred to. In Fig. 13, only the corrected speed β of the aspirating pump 228 is stored. The aspirating pump 228 is driven at the corrected speed β by use of an associated one pump driver 260E.

It is possible according to the multichannel structure to cancel a difference or error between the dispensing and aspirating flow rates simply by adjusting the speed of the aspirating pump 228.

In spite of the above embodiment, it is possible to construct the assay apparatus for a counterflow from the pipette tip CPB toward the pipette tip CPA if it is desired. The first pump 227 is driven for aspiration. The second pump 228 is driven for dispensation. Corrected speeds of those are the corrected speeds α and β. A negative value of the correction table T is used for corrected speeds. Consequently, errors can be corrected in the time of the counterflow, so as to suppress changes an inner pressure.

In the above embodiment, the assay apparatus 210 is according to surface plasmon resonance (SPR) assay. However, the assay apparatus 210 of the invention can be any suitable apparatus of systems of (bio) chemical assay. Measurement in which analyte is removed according to the invention may be any of suitable systems, for example, quartz crystal microbalance (QCM) measurement with quartz of oscillation, and measurement of functioning surfaces of various particles including colloid particles of gold, and ultramicro particles.

In addition to the SPR sensor, an assay sensor unit according to the invention can be other sensor in utilizing attenuated total reflection, for example, a leaky mode sensor.

Note that in any of the embodiments, a pipette device group having plural pipette devices may be constituted by a single multiple pipette assembly, or a plurality of multiple pipette assemblies, or a plurality of single pipette devices. In the wording of the specification, a multiple pipette assembly is generally combined with one pipette head, and may have any number of single pipette devices, for example, two, four, eight or so.

Although the present invention has been fully described by way of the preferred embodiments thereof with reference to the accompanying drawings, various changes and modifications will be apparent to those having skill in this field. Therefore, unless otherwise these changes and modifications depart from the scope of the present invention, they should be construed as included therein.

## Claims

1. A fluid dispenser for dispensation and introduction of a sample (A, D) to a sensing surface (250A) in a sensor unit (240), wherein said sensor unit includes a flow channel (245) with first and second orifices (245A, 245B), and said sensing surface positioned inside said flow channel for detecting reaction of said sample, said fluid dispenser comprising:
a pipette device group (224, 274), having first and second pipette devices (224A, 224B, 274A-274L) for being set at respectively said first and second orifices;
a dispensing pump (227) for causing said first pipette device (224A, 274A, 274C) to dispense said sample; and
an aspirating pump (228) for causing said second pipette device (224B, 274B, 274D) to aspirate said sample; **characterized by**
a speed controller (260) for controlling speeds (α,β) of said dispensing and aspirating pumps to cancel a finite difference (S) between a dispensing flow rate and an aspirating flow rate, said dispensing flow rate being associated with said first pipette device and said dispensing pump and per unit time, and said aspirating flow rate being associated with said second pipette device and said aspirating pump and per unit time.

2. A fluid dispenser as defined in claim 1, wherein said speed controller includes:
a memory for storing information of a corrected speed of at least one of said dispensing and aspirating pumps, to cancel a finite difference between said dispensing flow rate and said aspirating flow rate; and
a pump driver for driving said dispensing and aspirating pumps according to said corrected speed.

3. A fluid dispenser as defined in claim 1, wherein said pipette device group is constituted by plural pipette device groups;
further comprising:
a memory for storing information of a corrected speed of said aspirating pump for each of said plural pipette device groups, to cancel a finite difference between said dispensing flow rate and said aspirating flow rate; and
a pump driver for driving said aspirating pump according to said corrected speed.

4. An assay apparatus for assay in utilizing attenuated total reflection, in which the sensor unit (240) of claim 1 having a thin film (250), is used, said assay apparatus comprising as defined claim 1,
a light source (254A) for emitting illuminating light toward said thin film; and
a photo detector (254D) for detecting said illuminating light reflected by said thin film.

5. A fluid dispensing method of dispensing a sample (A, D) to a sensing surface (250A) in a sensor unit (240), wherein said sensor unit includes a flow channel (245) with first and second orifices (245A, 245B), and said sensing surface positioned inside said flow channel for detecting reaction of said sample, said fluid dispensing method comprising step of:
setting first and second pipette devices (224A, 224B, 274A-274L) at respectively said first and second orifices, said first and second pipette devices constituting a pipette device group (224, 274); and **characterized by** the step of
controlling speeds (α, β) of dispensing and aspirating pumps (227, 228) to cancel a finite difference (S) between a dispensing flow rate and an aspirating flow rate, said dispensing flow rate being associated with said first pipette device (224A, 274A, 274C) and said dispensing pump and per unit time, and said aspirating flow rate being associated with said second pipette device (224B, 274B, 274D) and said aspirating pump and per unit time.

## Patentansprüche

1. Fluidspender zum Spenden und Zuführen einer Probe (A, D) zu einer Sensorfläche (250A) in einer Sensoreinheit (240), wobei die Sensoreinheit einen Strömungskanal (245) mit einer ersten und einer zweiten Öffnung (245A, 245B) enthält, und die Sensorfläche im Inneren des Strömungskanals positioniert ist, um eine Reaktion der Probe nachzuweisen, wobei der Fluidspender umfasst:
eine Pipetteneinrichtungsgruppe (224, 274) mit einer ersten und einer zweiten Pipetteneinrichtung (224A, 224B, 274A-274L), die an der ersten bzw. der zweiten Öffnung anzusetzen sind;
eine Spenderpumpe (227), um die erste Pipetteneinrichtung (224A, 274A, 274C) zu veranlassen, die Probe zu spenden; und
eine Ansaugpumpe (228) zum Veranlassen der zweiten Pipetteneinrichtung (224B, 274B, 274D) zum Ansaugen der Probe;
**gekennzeichnet durch**
eine Geschwindigkeitssteuerung (260) zum Steuern der Geschwindigkeiten (α, β) der Spende- und Ansaugpumpen, um eine endliche Differenz (S) zwischen dem Spendeströmungsdurchsatz und einem Ansaugströmungsdurchsatz aufzuheben, wobei der Spendeströmungsdurchsatz zu der ersten Pipetteneinrichtung und der Spendepumpe pro Zeiteinheit gehört, und der Ansaugströmungsdurchsatz zu der zweiten Pipetteneinrichtung und der Ansaugpumpe pro Zeiteinheit gehört.

2. Fluidspender nach Anspruch 1, bei dem die Geschwindigkeitssteuerung enthält:
einen Speicher zum Speichern von Information einer korrigierten Geschwindigkeit von mindestens einer der Spende- und Ansaugpumpen, um eine endliche Differenz zwischen dem Spendeströmungsdurchsatz und dem Ansaugströmungsdurchsatz aufzuheben; und
einen Pumpentreiber zum Treiben der Spende- und Ansaugpumpen entsprechend der korrigierten Geschwindigkeit.

3. Fluidspender nach Anspruch 1, bei dem die Pipetteneinrichtungsgruppe durch mehrere Pipetteneinrichtungsgruppen gebildet wird,
weiterhin umfassend:
einen Speicher zum Speichern von Information einer korrigierten Geschwindigkeit der Ansaugpumpe für jede der mehreren Pipetteneinrichtungsgruppen, um eine endliche Differenz zwischen dem Spendeströmungsdurchsatz und dem Ansaugströmungsdurchsatz aufzuheben; und
einen Pumpentreiber zum Treiben der Ansaugpumpe gemäß der korrigierten Geschwindigkeit.

4. Prüfvorrichtung für eine Prüfung unter Nutzung gedämpfter Totalreflexion, in der die Sensoreinheit (240) nach Anspruch 1 mit einer Dünnschicht (250) verwendet wird, wobei die Prüfvorrichtung aufweist:
einen Fluidspender nach Anspruch 1,
eine Lichtquelle (254A) zum Emittieren von Beleuchtungslicht in Richtung der Dünnschicht; und
einen Photodetektor (254D) zum Nachweisen des von der Dünnschicht reflektierten Beleuchtungslichts.

5. Fluidspendeverfahren zum Spenden einer Probe (A, D) auf eine Sensorfläche (250A) in einer Sensoreinheit (240), wobei die Sensoreinheit einen Strömungskanal (245) mit einer ersten und einer zweiten Öffnung (245A, 245B) enthält und die Sensorfläche innerhalb des Strömungskanals positioniert ist, um eine Reaktion der Probe nachzuweisen, wobei das Fluidspendeverfahren folgenden Schritt aufweist:
Einstellen einer ersten und einer zweiten Pipetteneinrichtung (224A, 224B, 274A-274L) an der ersten bzw. der zweiten Öffnung, wobei die erste und die zweite Pipetteneinrichtung eine Pipetteneinrichtungsgruppe (224, 274) bilden;
**gekennzeichnet durch** den Schritt des
Steuerns der Geschwindigkeit (α, β) von Spende- und Ansaugpumpen (227, 228) zum Aufheben einer endlichen Differenz (S) zwischen einem Spendeströmungsdurchsatz und einem Ansaugströmungsdurchsatz, wobei der Spendeströmungsdurchsatz zu der ersten Pipetteneinrichtung (224A, 274A, 274C) und der Spendepumpe pro Zeiteinheit gehört, und der Ansaugströmungsdurchsatz zu der zweiten Pipetteneinrichtung (224B, 274B, 274D) und der Ansaugpumpe pro Zeiteinheit gehört.

## Revendications

1. Distributeur de fluide pour la distribution et l'introduction d'un échantillon (A, D) sur une surface de détection (250A) dans une unité de capteur (240), dans lequel ladite unité de capteur comprend un canal d'écoulement (245) avec des premier et deuxième orifices (245A, 245B) et ladite surface de détection positionnée à l'intérieur dudit canal d'écoulement pour détecter la réaction dudit échantillon, ledit distributeur de fluide comprenant :
un groupe de dispositifs formant pipettes (224, 274), ayant des premier et deuxième dispositifs formant pipettes (224A, 224B, 274A-274L) destinés à être placés dans lesdits premier et deuxième orifices respectivement ;
une pompe de distribution (227) pour amener ledit premier dispositif formant pipette (224A, 274A, 274C) à distribuer ledit échantillon ; et
une pompe d'aspiration (228) pour amener ledit deuxième dispositif formant pipette (224B, 274B, 274D) à aspirer ledit échantillon ;
**caractérisé par** un contrôleur de vitesse (260) pour contrôler des vitesses (α, β) desdites pompes de distribution et d'aspiration afin d'annuler une différence limitée (S) entre un débit de distribution et un débit d'aspiration, ledit débit de distribution étant associé audit premier dispositif formant pipette et à ladite pompe de distribution et par unité de temps, et ledit débit d'aspiration étant associé audit deuxième dispositif formant pipette et à ladite pompe d'aspiration et par unité de temps.

2. Distributeur de fluide selon la revendication 1, dans lequel ledit contrôleur de vitesse comprend :
une mémoire pour mémoriser l'information d'une vitesse corrigée d'au moins l'une parmi lesdites pompes de distribution et d'aspiration, afin d'annuler une différence limitée entre ledit débit de distribution et ledit débit d'aspiration ; et
un dispositif d'entraînement de pompe pour entraîner lesdites pompes de distribution et d'aspiration selon ladite vitesse corrigée.

3. Distributeur de fluide selon la revendication 1, dans lequel ledit groupe de dispositifs formant pipettes est constitué par plusieurs groupes de dispositifs formant pipettes ;
comprenant en outre :
une mémoire pour mémoriser des informations d'une vitesse corrigée de ladite pompe d'aspiration pour chacun desdits plusieurs groupes de dispositifs formant pipettes, afin d'annuler une différence limitée entre ledit débit de distribution et ledit débit d'aspiration ; et
un dispositif d'entraînement de pompe pour entraîner ladite pompe d'aspiration selon ladite vitesse corrigée.

4. Appareil d'essai pour faire des essais en utilisant la réflexion totale atténuée, dans lequel on utilise l'unité de capteur (240) de la revendication 1, ayant un film fin (250), ledit appareil d'essai comprenant, selon la revendication 1 ,
une source de lumière (254A) pour émettre la lumière d'éclairage vers ledit film fin ; et
un photodétecteur (254D) pour détecter ladite lumière d'éclairage réfléchie par ledit film fin.

5. Procédé de distribution de fluide pour distribuer un échantillon (A, D) sur une surface de détection (250A) dans une unité de capteur (240), dans lequel ladite unité de capteur comprend un canal d'écoulement (245) avec des premier et deuxième orifices (245A, 245B), et ladite surface de détection positionnée à l'intérieur dudit canal d'écoulement pour détecter la réaction dudit échantillon, ledit procédé de distribution de fluide comprenant l'étape consistant à :
placer les premier et deuxième dispositifs formant pipettes (224A, 224B, 274A-274L) respectivement dans lesdits premier et deuxième orifices, lesdits premier et deuxième dispositifs formant pipettes constituant un groupe de dispositifs formant pipettes (224, 274) ; et **caractérisé par** l'étape consistant à :
contrôler des vitesses (α, P) des pompes de distribution et d'aspiration (227, 228) pour annuler une différence limitée (S) entre un débit de distribution et un débit d'aspiration, ledit débit de distribution étant associé audit premier dispositif formant pipette (224A, 274A, 274C) et à ladite pompe de distribution et par unité de temps, et ledit débit d'aspiration étant associé audit deuxième dispositif formant pipette (224B, 274B, 274D) et à ladite pompe d'aspiration et par unité de temps.
